# EUROPEAN PATENT SPECIFICATION

(11) **EP 3 020 953 B1**
(45) Date of publication and mention of the grant of the patent: **10.01.2018**
(21) Application number: 15193599.6
(22) Date of filing: 09.11.2015
(51) Int. Cl.: F02K 3/06, F02C 3/107, F02C 7/36, F01D 25/12, F02C 7/18, F01D 5/08

(54) **GAS TURBINE ENGINE**
GASTURBINENMOTOR
MOTEUR À TURBINE À GAZ

(30) Priority: 13.11.2014 GB 201420175
(43) Date of publication of application: 18.05.2016
(73) Proprietor: Rolls-Royce Deutschland Ltd & Co KG, 15827 Blankenfelde-Mahlow (DE)
(72) Inventor: Negulescu, Dimitrie, 14163 Berlin (DE)
(74) Representative: Rolls-Royce plc

(56) References cited:
- EP-A2- 1 921 255
- WO-A1-2006/059981
- GB-A- 2 513 621
- US-A- 3 031 132
- US-A- 4 947 642

## Description

The present invention relates to a gas turbine engine. More specifically the invention relates to gas turbine engines that comprise a multiplier power gearbox arranged to allow compressors to rotate at different rates to that of the driving turbine.

The use of a gearbox in a gas turbine engine offers benefits in terms of allowing different compressors of the gas turbine to be better matched in terms of their rotation rate to a particular compression requirement. The gearbox allows different compressors to be driven by the same shaft (and therefore turbine) and yet to rotate at different rates. Conventionally a reduction gearbox is used to gear down the first compressor (often a fan in a gas turbine engine) with respect to the shaft speed of the driving shaft. The same driving turbine is then used to drive the second compressor (e.g. an intermediate pressure compressor) directly and therefore at a faster rate. Such gearboxes are typically relatively large, heavy and maintenance intensive, factors which off-set a proportion of the benefit in efficiency gained through use of the gearbox.

US4947642 discloses a propfan turbo-engine having two shrouded propfan rotors arranged upstream of a gas turbine which are driven by a contra-rotating working turbine. The propfan rotors are directly driven by turbines, while a compressor is driven at an increased speed by a gearbox.

GB2513621 discloses a fan and booster compressor system for a turbo machine comprising a first and second shafts coupled to a first and second input members of an epicyclic gear unit respectively; a fan 12 coupled to the second shaft and a booster compressor coupled to an output member of the epicyclic gear unit, the booster compressor is driveable by both the first and second shafts. The output member may be a planet carrier, the first input member an annular gear and the second input member a sun gear. Alternatively the output member may be an annular gear, the first input member a planet carrier and the second input member a sun gear. The diameters of the gears of the gear unit may be provided such that, in use, the booster compressor rotates faster than the fan and in the same direction.
WO06059981 discloses a hydraulic seal for a tip turbine engine includes an inner radial flange and an outer radial flange. The inner radial flange rotates relative the outer radial seal section and the planet carrier face to prevent lubrication from entering into the air flow streams within the engine without additional engine assembly procedures.
According to a first aspect of the invention there is provided a gas turbine engine according to claim 1. The drive arrangement of the first aspect may be considered to comprise an epicyclical multiplier power gearbox (MGB) used to gear up the higher speed compressor relative to the turbine, shaft and lower speed compressor. This may be contrasted with a reduction power gearbox (RGB) typical of geared gas turbine engines, which instead gears down the lower speed compressor relative to the faster turbine, shaft and higher speed compressor. Gearing up the higher speed compressor rather than gearing down the lower speed compressor means the gearbox can be smaller and lighter in weight. This is because the gearbox is only responsible for driving the higher speed compressor rather than the lower speed compressor, the later potentially being significantly larger and heavier than the former and absorbing the majority of the power generated by the turbine. In addition to size and weight reductions in the gearbox itself, the oil system for lubricating the gearbox can also be of a reduced capacity.
The use of the planet carrier as the recipient of drive from the turbine and either the sun gear or ring gear (illustrative embodiment, not forming part of the claimed invention) as the output for driving the higher speed compressor, offers common rotation direction between the compressors. Common rotation may allow for simpler, more conventional higher speed compressor geometry and/or for struts/stators between the lower and higher speed compressors to have a simpler angle. By way of example, a gas turbine engine with counterrotating fan and intermediate pressure compressor might necessitate either engine section stators of a complex design or a compensating intermediate pressure compressor geometry change. Co-rotation on the other hand may facilitate use of a conventional intermediate pressure compressor geometry as well as simply angled engine section stators.

In some embodiments (not forming part of the claimed invention) the output from the gearbox to drive the higher speed compressor is from the sun gear and the ring gear is static. This arrangement may be suitable for providing a gear ratio greater than 2. In particular, in some embodiments the higher speed compressor is geared up with respect to the turbine and lower speed compressor at a ratio of between 4:1 and 5:1. More specifically the ratio may be between 4.1:1 and 4.5:1. More specifically still the ratio may be between 4.3:1 and 4.4:1.

In some embodiments (not forming part of the claimed invention) a driving link between the shaft and the planet carrier is located forward of the gearbox. This may allow for a design that is more compact and efficient. The output from the gearbox to drive the higher speed compressor is from the ring gear and the sun gear is static. This arrangement may be suitable for providing a gear ratio smaller than 2.
In some embodiments the gearbox is forward of the higher speed compressor. Specifically it may be that the gearbox is forward of a first rotor stage of the higher speed compressor. This may allow for a design that is more compact and efficient. Further this may allow for convenient delivery of cooling and/or sealing air as described further below.
In some embodiments the gas turbine engine comprises a stator array substantially axially aligned with and radially outward of the gearbox.

In some embodiments the stators are immediately upstream of aerofoils of the higher speed compressor and are arranged in use to condition the air entering the aerofoils.

In some embodiments the gas turbine engine is a turbofan engine comprising a core duct and a bypass duct.

In some embodiments an air passage is provided through an intercase between the core and bypass ducts, through one or more of the stators in the stator array which is located in the core duct and into a region radially inward of the core duct. In use air may be fed to the air passage through a bleed in the core duct. Once delivered via the air passage, the air may be used for sealing bearings.

In some embodiments the air passage bifurcates at a radial location between the stators and the gearbox to allow the supply of air to both sides of the gearbox.

In some embodiments the lower speed compressor is a fan. Embodiments of the invention may be particularly suitable where the lower speed compressor is a fan because fans are often considerably larger and heavier than downstream compressors.

In some embodiments the gearbox is located aft of the fan. It may further be that the gearbox is located aft of a fan module. The fan module may be selectively separable and removable from the rest of the engine via releasable couplings.

In some embodiments the gearbox is located within a casing between a module for the fan and a forward main bearing for the shaft.

In some embodiments the higher speed compressor is a compressor immediately downstream of the fan. The compressor may be considered an intermediate pressure compressor driven by the turbine that drives the fan or as a high speed/boosted booster compressor.

In some embodiments the gas turbine engine is a two shaft engine further comprising a high pressure turbine, high pressure shaft and high pressure compressor.

The skilled person will appreciate that a feature described in relation to any one of the above aspects of the invention may be applied mutatis mutandis to any other aspect of the invention.

Embodiments of the invention will now be described by way of example only, with reference to the Figures, in which:
**Figure 1** is a sectional side view of a gas turbine engine;
**Figure 2** is a cross-sectional side view of a portion of a gas turbine engine according to an embodiment of the invention.

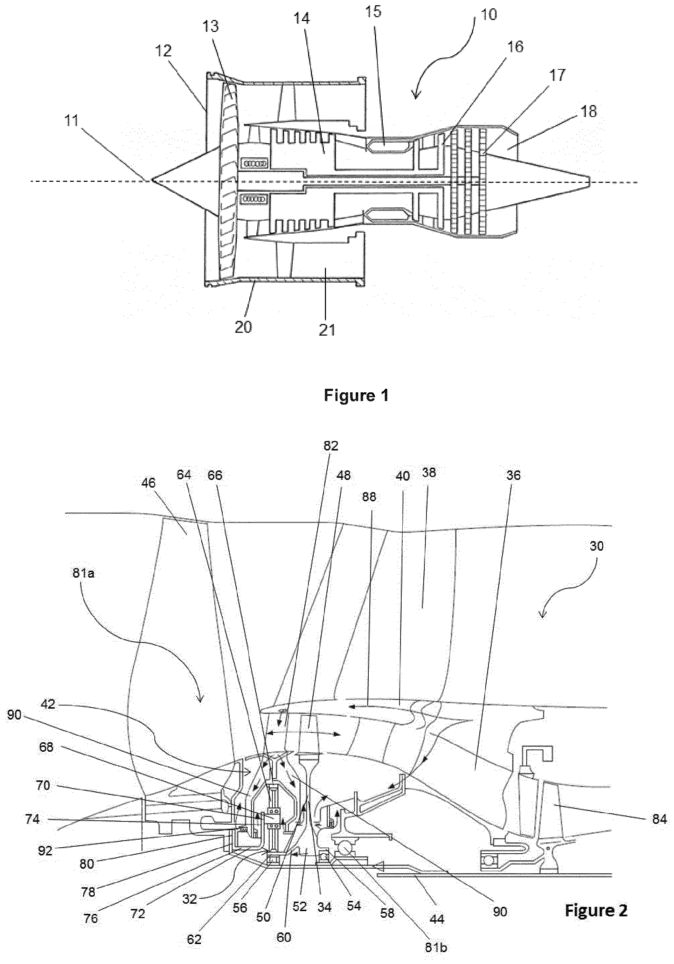

With reference to Figure 1, a gas turbine engine is generally indicated at 10, having a principal and rotational axis 11. The engine 10 comprises, in axial flow series, an air intake 12, a propulsive fan 13, a high-pressure compressor 14, combustion equipment 15, a high-pressure turbine 16, a low-pressure turbine 17 and an exhaust nozzle 18. A nacelle 20 generally surrounds the engine 10 and defines the intake 12.

The gas turbine engine 10 works in the conventional manner so that air entering the intake 12 is accelerated by the fan 13 to produce two air flows: a first air flow into the high-pressure compressor 14 and a second air flow which passes through a bypass duct 21 to provide propulsive thrust. The high-pressure compressor 14 compresses the air flow directed into it before delivering that air to the combustion equipment 15.

In the combustion equipment 15 the air flow is mixed with fuel and the mixture combusted. The resultant hot combustion products then expand through, and thereby drive the high and low-pressure turbines 16, 17 before being exhausted through the nozzle 18 to provide additional propulsive thrust. The high 16 and low 17 pressure turbines drive respectively the high pressure compressor 14 and the fan 13, each by suitable interconnecting shaft.

Referring now to Figure 2 a portion of a gas turbine engine 30 is shown. The gas turbine engine 30 shares many similarities with the gas turbine engine 10 of Figure 1, but utilises a gearbox 32 via which a higher speed compressor (in this case an intermediate pressure compressor 34) is driven.

Gas turbine engine 30 is a turbofan engine having a core duct 36 radially inward of a bypass duct 38. The core duct 36 and bypass duct 38 are separated by an intercase 40. Located in a region (generally shown at 42) radially inward of the core duct 36, is a shaft 44 running substantially parallel with a principal and rotational axis 46 of the gas turbine engine 30. The shaft 44 is directly connected to a lower speed compressor (in this case a fan 46), which is located upstream of the intercase 40 and forward of the gearbox 32.

The intermediate pressure compressor 34 is located downstream of the fan 46 with its aerofoils 48 spanning the core duct 36 in a radial direction. The intermediate pressure compressor 34 is also located aft of the gearbox 32. A disc 50 of the intermediate pressure compressor 34 extends radially within the region 42. At its innermost radial extent, the disc 50 comprises a cob 52 surrounding and coaxial with the shaft 44. As will be appreciated, in other embodiments the intermediate pressure compressor 34 may comprise multiple compressor stages and therefore multiple connected discs forming a drum.

The disc 50 is located with respect to the shaft 44 by an aft bearing 54 and a forward bearing 56. The aft bearing 54 is located between the shaft 44 and a hollow cylindrical protrusion 58 extending substantially axially aft from the cob 52 of the intermediate pressure compressor 34. The protrusion 58 is coaxial with the shaft 44. The forward bearing 56 is located between the shaft 44 and a drive arm 60 of the intermediate pressure compressor 34. The drive arm 60 extends substantially axially forward of the cob 52 of the disc 50, is substantially cylindrical and is coaxial with the shaft 44. Part of the drive arm 60 forms a mobile sun gear 62 of the gearbox 32.

Radially outward of the forward bearing 56 and sun gear 62, the gearbox 32 comprises a plurality of planet gears 64 (only one shown). Teeth of each planet gear 64 mesh with teeth of the sun gear 62 and further with teeth of a fixed ring gear 66 which is radially outward of the planet gears 62. Each of the planet gears 62 are engaged at their centres by spindles 68 of a planet carrier 70. The planet carrier 70 has a link arm 72 comprising a radially extending disc 74 and an axially extending cylinder 76, the cylinder 76 extending forward of the disc 74. The spindles 68 are connected to the radially outer periphery of the disc 74 and the cylinder 76 is connected to the disc at a radially inner position. A forward end of the cylinder 76 is provided with a radially extending flange 78 which is connected to the shaft 44 to form a driving link 80 for the planet carrier 70. The driving link 80 between the shaft 44 and the planet carrier 70 is therefore located forward of the gearbox 32. Further the whole of the gearbox 32 is located forward of the intermediate pressure compressor 34 and within a structural casing between a module for the fan (generally shown at 81a) and a forward main bearing 81b for the shaft 44.

Between the aerofoils 48 of the intermediate pressure compressor 34 and the fan 13, but still within the core duct 36, is a stator array 82 (only one stator shown). The stator array 82 is immediately upstream of the aerofoils 48 of the intermediate pressure compressor 34 and is substantially axially aligned with and radially outward of the gearbox 32. As will be appreciated, in some embodiments the stators of the stator array 82 may be variable stators.

The shaft 44 is connected to a turbine (not shown) aft and downstream of the intermediate pressure compressor 34 and a combustor (not shown). As will be appreciated one or more additional higher pressure compressor and turbine pairs connected by their own shafts may also be provided. In the present embodiment a high pressure compressor 84 is provided downstream of the intermediate pressure compressor 34. The high pressure compressor 84 is connected to a high pressure turbine (not shown) located between the combustor and the turbine connected to shaft 44. The high pressure compressor 84 and high pressure turbine are connected by a high pressure shaft (not shown).

A valve controlled core bleed (not shown) is located in the intercase 40 between the intermediate pressure compressor 34 and the high pressure compressor 84 and is in fluid communication with the core duct 36. An air passage 88 in fluid communication with the core bleed passes forward in the interior of the intercase 40, passes radially inwards through a stator of the stator array 82 and into the region 42. Thereafter the air passage 88 bifurcates, with conduits 90 passing further radially inwards to either side of the gearbox 32. The conduits 90 terminate at seals 92 (only one shown). The air passage 88 therefore bifurcates at a radial location between the stator array 82 and the gearbox 32. The fixed ring gear 66 is attached at its radially outer surface to the air passage 88 at the point where it bifurcates to pass either side of the gearbox 32.

In use, air passing through the core duct 36 of the gas turbine engine 30 is combusted with fuel in the combustor. The expanding exhaust gases drive the turbine (not shown), which drives the shaft 44. Rotation of the shaft 44, causes rotation of the fan 46 (which is directly connected to the shaft 44) at the same rate as the shaft 44. Rotation of the shaft 44 also causes rotation of the planet carrier 70, which is directly connected to the shaft 44 via the driving link 80. Rotation of the planet carrier 70 causes both rotation of each planet gear 62 around its respective spindle 68 of the planet carrier 70 and orbiting of each planet gear 62 about the principal and rotational axis 46 of the gas turbine engine 30. The planet gears 62 are supported in their rotation between the fixed ring gear 66 and the mobile sun gear 62.

The rotation and orbiting of the planet gears 62 causes rotation of the sun gear 62 and consequent rotation of the intermediate pressure compressor 34. The gearing arrangement means that the fan 46 and intermediate pressure compressor 34 will have a common rotation direction. Specifically the rotation direction delivered to the planet carrier 70 is common to the rotation direction of the fan 46 in accordance with the rotation direction of the shaft 44. This gives rise to rotation in the opposite direction of the planet gears 62 about their respective spindles 68. This in turn gives rise to rotation of the sun gear 62 and so the intermediate pressure compressor 34 in the same direction as the shaft 44 and fan 46.

The gearing arrangement also means that the intermediate pressure compressor 34 will be geared up with respect to the fan 46. This suits the higher pressure compression requirements of the intermediate pressure compressor 34. Specifically the sun gear 62 of the gearbox 32 will necessarily rotate more rapidly than the planet carrier 70 because it is located radially inside of the planet carrier 70. Consequently the intermediate pressure compressor 34 is driven to rotate more rapidly than the planet carrier 70, shaft 44 and fan 46.

Air is drawn into the gas turbine engine 30 and compressed by the rotating fan 46. The air is then separated by the intercase 40 into a bypass flow passing through the bypass duct 38 and a core flow passing through the core duct 36. Air passing through the core duct 36 is conditioned by the stator array 82 before it enters and is further compressed by the intermediate pressure compressor 34. When the valve (not shown) controlling the core bleed is open, a proportion of the air compressed by the intermediate pressure compressor 34 is bled from the core duct 36 before it reaches the high pressure compressor 84. The bled air travels in the air passage 88, forward through the intercase 40, through the stator vane, past the bifurcation in the air passage 88 and is delivered to one or other of the seals 92.

As will be appreciated, where the terms upstream and downstream are used in this specification, they are to be interpreted with respect to the normal and principal direction of movement of gases through the gas turbine engine 30. Further where the terms forward and aft are used in this description, they are to be interpreted such that forward means towards the front of the gas turbine engine 30 and aft means towards the back of the gas turbine engine 30.

It will be understood that the invention is not limited to the embodiments above-described and various modifications and improvements can be made without departing from the various concepts described herein. By way of example the gearbox may drive the intermediate pressure compressor via the ring gear and the sun gear may be static. This may be suited to a lower speed ratio between the fan and intermediate pressure compressor and a gas turbine engine with a lower bypass ratio than that discussed with respect to the drawings. By way of example a sun gear driven intermediate pressure compressor may be better suited to a gas turbine engine having bypass to core ratio of 7:1 or greater whereas a ring gear driven intermediate pressure compressor may be better suited bypass to core ratios of approximately 5:1. Except where mutually exclusive, any of the features may be employed separately or in combination with any other features and the invention extends to and includes all combinations and sub-combinations of one or more features described herein in any form of gas turbine engine, if within the scope of the appended claims.

## Claims

1. A gas turbine engine (10) comprising a higher speed compressor (34), a lower speed compressor (46), a multiplier power gearbox (32), a turbine and a shaft (44) driven by the turbine, the turbine directly driving the lower speed compressor (46) via the shaft (44) and indirectly driving the higher speed compressor (34) via the shaft (44) and the multiplier power gearbox (32), the gearbox (32) comprising a ring gear (66), a plurality of planet gears (62) and planet carrier (70) and a sun gear (62), the input from the turbine to the gearbox (32) being to the carrier (70) and **characterized in that** the output from the gearbox (32) to drive the higher speed compressor (34) being from the ring gear (66), the sun gear (62) being static.

2. A gas turbine engine according to any preceding claim where the gearbox (32) is forward of the higher speed compressor (34).

3. A gas turbine engine according to any preceding claim further comprising a stator array (82) substantially axially aligned with and radially outward of the gearbox (32).

4. A gas turbine engine according to claim 3 where stators of the stator array (82) are immediately upstream of aerofoils (48) of the higher speed compressor (34) and are arranged in use to condition the air entering the aerofoils (48).

5. A gas turbine engine according to any preceding claim where the gas turbine engine is a turbofan engine (10) comprising a core duct (36) and a bypass duct (38).

6. A gas turbine engine according to claim 5 where an air passage (88) is provided through an intercase (40) between the core (36) and bypass ducts (38), through one or more of the stators in the stator array (82) which is located in the core duct (36) and into a region (42) radially inward of the core duct (36).

7. A gas turbine engine according to any preceding claim where the lower speed compressor is a fan (46).

8. A gas turbine engine according to claim 7 where the gearbox (32) is located within a casing between a module (81a) for the fan and a forward main bearing (81b) for the shaft (44).

9. A gas turbine engine according to claim 7 or claim 8 where the higher speed compressor (34) is a compressor immediately downstream of the fan (46).

10. A gas turbine engine according to any preceding claim where the gas turbine engine (10) is a two shaft engine further comprising a high pressure turbine, high pressure shaft and high pressure compressor.

## Patentansprüche

1. Gasturbinenmotor (10), aufweisend einen Kompressor mit höherer Drehzahl (34), einen Kompressor mit niedrigerer Drehzahl (46), ein Leistungsverstärkungsgetriebe (32), eine Turbine und eine Welle (44), die durch die Turbine angetrieben wird, wobei die Turbine den Kompressor mit niedrigerer Drehzahl (46) über die Welle (44) direkt antreibt und den Kompressor mit höherer Drehzahl (34) über die Welle (44) und das Leistungsverstärkungsgetriebe (32) indirekt antreibt, wobei das Getriebe (32) einen Zahnkranz (66), eine Mehrzahl von Planetenrädern (62) und einen Planetenträger (70) und ein Sonnenrad (62) aufweist, wobei der Eingang von der Turbine zu dem Getriebe (32) zu dem Träger (70) erfolgt und **dadurch gekennzeichnet ist, dass** der Ausgang von dem Getriebe (32) zum Antreiben des Kompressors mit höherer Drehzahl (34) von dem Zahnkranz (66) erfolgt, wobei das Sonnenrad (62) statisch ist.

2. Gasturbinenmotor nach einem der vorhergehenden Ansprüche, wobei sich das Getriebe (32) vor dem Kompressor mit höherer Drehzahl (34) befindet.

3. Gasturbinenmotor nach einem der vorhergehenden Ansprüche, ferner aufweisend eine Statoranordnung (82), die im Wesentlichen axial auf das Getriebe (32) und davon radial nach außen ausgerichtet ist.

4. Gasturbinenmotor nach Anspruch 3, wobei Statoren der Statoranordnung (82) unmittelbar stromaufwärts von Flügeln (48) des Kompressors mit höherer Drehzahl (34) liegen und im Einsatz angeordnet sind, um die in die Flügel (48) eintretende Luft zu konditionieren.

5. Gasturbinenmotor nach einem der vorhergehenden Ansprüche, wobei der Gasturbinenmotor ein Mantelstromtriebwerk (10) ist, das einen Kernkanal (36) und einen Seitenkanal (38) aufweist.

6. Gasturbinenmotor nach Anspruch 5, wobei ein Luftdurchlass (88) durch ein Zwischengehäuse (40) zwischen dem Kern- (36) und dem Seitenkanal (38) durch einen oder mehrere der Statoren in der Statoranordnung (82), die sich in dem Kernkanal (36) befindet, und in einen Bereich (42) bereitgestellt wird, der radial nach innen von dem Kernkanal (36) liegt.

7. Gasturbinenmotor nach einem der vorhergehenden Ansprüche, wobei der Kompressor mit niedrigerer Drehzahl ein Lüfter (46) ist.

8. Gasturbinenmotor nach Anspruch 7, wobei sich das Getriebe (32) in einem Gehäuse zwischen einem Modul (81a) für den Lüfter und einem vorderen Hauptlager (81b) für die Welle (44) befindet.

9. Gasturbinenmotor nach Anspruch 7 oder Anspruch 8, wobei der Kompressor mit höherer Drehzahl ein Kompressor unmittelbar stromabwärts des Lüfters (46) ist.

10. Gasturbinenmotor nach einem der vorhergehenden Ansprüche, wobei der Gasturbinenmotor (10) ein Zweiwellentriebwerk ist, das ferner eine Hochdruckturbine, eine Hochdruckwelle und einen Hochdruckkompressor aufweist.

## Revendications

1. Moteur à turbine à gaz (10) comprenant un compresseur à vitesse supérieure (34), un compresseur à vitesse inférieure (46), une boîte de vitesses multiplicatrice de puissance (32), une turbine et un arbre (44) entraîné par la turbine, la turbine entraînant directement le compresseur à vitesse inférieure (46) par l'intermédiaire de l'arbre (44) et entraînant indirectement le compresseur à vitesse supérieure (34) par l'intermédiaire de l'arbre (44) et de la boîte de vitesses multiplicatrice de puissance (32), la boîte de vitesses (32) comprenant une couronne (66), une pluralité d'engrenages satellites (62) et de portes-satellites (70) et un engrenage planétaire (62), l'entrée allant de la turbine jusqu'à la boîte de vitesses (32) étant au porteur (70) et **caractérisé en ce que** la sortie de la boîte de vitesses (32) pour entraîner le compresseur à vitesse supérieure (34) provient de la couronne (66), l'engrenage planétaire (62) étant statique.

2. Moteur à turbine à gaz selon l'une quelconque des revendications précédentes, ladite boîte de vitesses (32) étant à l'avant du compresseur à vitesse supérieure (34).

3. Moteur à turbine à gaz selon l'une quelconque des revendications précédentes, comprenant en outre un réseau de stators (82) alignés sensiblement de manière axiale avec la boîte de vitesse (32) et de manière radiale vers l'extérieur de celle-ci.

4. Moteur à turbine à gaz selon la revendication 3, lesdits stators du réseau de stators (82) étant immédiatement en amont des profils aérodynamiques (48) du compresseur à vitesse supérieure (34) et étant agencés lors de l'utilisation pour conditionner l'air entrant au niveau des profils aérodynamiques (48).

5. Moteur à turbine à gaz selon l'une quelconque des revendications précédentes, ledit moteur à turbine à gaz étant un moteur de turboréacteur (10) comprenant un conduit central (36) et un conduit de dérivation (38).

6. Moteur à turbine à gaz selon la revendication 5, un passage d'air (88) étant assuré à travers un carter intermédiaire (40) entre les conduits central (36) et de dérivation (38), à travers un ou plusieurs des stators dans le réseau de stators (82) qui se trouve dans le conduit central (36) et dans une zone (42) radialement vers l'intérieur du conduit central (36).

7. Moteur à turbine à gaz selon l'une quelconque des revendications précédentes, le compresseur à vitesse inférieure étant une soufflante (46).

8. Moteur à turbine à gaz selon la revendication 7, ladite boîte de vitesses (32) étant située dans un carter entre un module (81a) pour la soufflante et un palier principal avant (81b) pour l'arbre (44).

9. Moteur à turbine à gaz selon la revendication 7 ou 8, ledit compresseur à vitesse supérieure (34) étant un compresseur immédiatement en aval de la soufflante (46).

10. Moteur à turbine à gaz selon l'une quelconque des revendications précédentes, ledit moteur à turbine à gaz (10) étant un moteur à deux arbres comprenant en outre une turbine à haute pression, un arbre à haute pression et un compresseur à haute pression.
